# EUROPEAN PATENT APPLICATION

(11) **EP 1 607 212 A2**
(43) Date of publication of application: **21.12.2005**
(21) Application number: 05104971.6
(22) Date of filing: 08.06.2005
(51) Int. Cl.: B31B 19/84

(54) **Machine for the manufacture of flexible pouches for containing liquids for pharmaceutical or alimentary use.**

(30) Priority: 14.06.2004 IT MI20041187
(71) Applicant: GOBBI FRATTINI, Ditta Paolo Giuseppe, 23035 Sondalo (SO) (IT)
(72) Inventor: Gobbi Frattini, Renzo, 23035, SONDALO (IT)
(74) Representative: Mittler, Enrico

(57) **Abstract**

A machine for the manufacture of flexible pouches for containing liquids for pharmaceutical or alimentary use comprises a band (2) of flexible plastic material made up of two edges (4, 5) folded one on the other one according to a U-shape conformation with opening arranged sideways, means (1) for the step by step advancement of said band (2) of flexible plastic material, heat welding means (6, 8) for welding said edges (4, 5) to each other transversally and along said opening so as to form single pouches (9) of flexible plastic material arranged next to each other, and a device (13) for introducing a variable number of tubes (14) of plastic material into said opening and to support them into it during welding. The device (13) comprises a supporting bar (16) for a plurality of metallic needles (19) parallel to each other, destined to the support of respective tubes (14), and the supporting bar (16) is slidable in direction transversal to the one of advancement of the band (2) in order to be movable between a back position, in which the loading of the tubes (14) on respective needles (19) is operable, and a position near the band (2), in which said needles (19) insert and keep the respective tubes (14) inside said opening of the band (2) for the entire welding operation. There are provided means (15) for preheating the tubes (14) after the their loading on said needles (19) and before their introduction into said opening of the band (2).

## Description

The present invention concerns a machine for the manufacture of flexible pouches for containing liquids for pharmaceutical or alimentary use.

The use of pouches of flexible material for containing liquids suitable to the treatment and the feeding of patients is known.

The traditional technique in use until some time ago provided the creation of pouches made of PVC , which were obtained by means of partitioning transversal weldings from a continuous band of PVC sheet folded as a U-shape with opening arranged sideways. The aforesaid opening was in turn closed by means of longitudinal welding after the insertion in the same opening of the terminal parts of opportune plastic tubes destined to the filling and to the emptying of the pouch.

PVC allowed the use of radio frequency welding techniques that guaranteed a perfect adhesion of the two overlapping PVC edges to each other as well as to the plastic tubes.

Recently however there has been the tendency to replace PVC with other suitable plastic materials, in particular extruded or co-extruded polyolefin plastic materials with polythene, polyethylene and polypropylene based, alone or in combination with each other.

The use of the new materials has lead to the use of hot bar welding techniques, that is with welding obtained by means of application of heat on behalf of opportunely shaped electrodes and counter-electrodes.

This change involved inevitable problems concerning the application of the tubes, which being themselves made of plastic (usually in co-extruded polythene-ethylvinylacetate with external edge made of the same material as the inside of the pouch) are as a result evidently sensitive to the welding heat and can close in permanent way besides welding themselves to the material of the pouch, or to create tightness problems with the time.

In order to avoid this, it has been found to be necessary to pre-insert into the tube a stainless steel needle, which works as a support for the tube in the stage of introduction of the same tube into the side opening of the U-shape folded flexible material, which remains inside it for the entire time of the welding and partitioning into pouches and finally gets extracted from the tube once the welding has been completed.

Even with this expedient there is still the problem to avoid that strong differences in temperature between the tubes in the stage of insertion and the welding means may cause thermal shocks and damages to the tubes and to their welding to the pouches.

Object of the present invention has consequently been to provide a machine for the manufacture of flexible pouches for containing liquids for pharmaceutical or alimentary use, which provided an advantageous device for the loading and the support of the tubes during the stage of application to the pouches.

In view of such object the machine according to the present invention has been thus been made, that comprises a band of flexible plastic material made up of two edges folded one on top of the other according to a U-shape conformation with opening arranged sideways, means for the step by step advancement of said band of flexible plastic material, heat welding means for welding said edges with each other transversally and along said opening in order to form single pouches of flexible plastic material arranged next to each other, and a device for introducing a variable number of plastic material tubes into said opening and to support them into it during welding, said device comprising a supporting bar for a plurality of stainless steel needles parallel to each other, destined to the support of respective tubes, and said supporting bar being slidable in direction transversal to the one of advancement of the band in order to be movable between a back position, in which loading of the tubes on the respective needles is operable, and a position near the band, in which said needles insert and keep the respective tubes inside said opening of the band for the entire welding operation, characterised in that it comprises means for preheating the tubes after their loading on said needles and before their introduction into said opening of the band.

The preheating of the needles can be obtained by coaxially putting inside of each needle an electric conductor which has one end attached to the free tip of the needle and the other end connected with a electric contact connectable with a power supply.

In this way the aforesaid electric conductor can provide to the heating of the point of the needle during the welding operation and it can instead leave it free to cool down once welding is over.

As an alternative it can be provided to heat the tubes from the outside with the needles inserted into them.

These and other characteristics of the present invention will become evident from the following detailed description an embodiment thereof which is illustrated as a non-limiting example in the enclosed drawings, in which:
Figures 1-6 show schematic perspective views of a machine according to the invention in several operation stages;
Figure 7 shows a plan view of a possible device for the preheating of the tubes comprised in the aforesaid machine;
Figure 8 shows the aforesaid preheating device in section according to the line VIII- VIII in Figure 7.

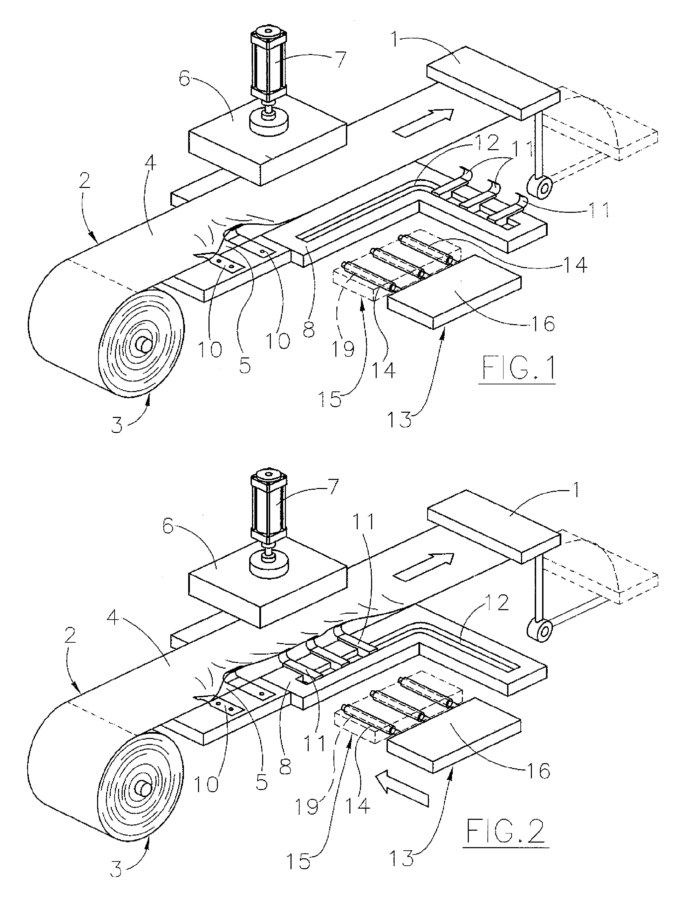

With reference to Figures 1-6, there is shown an embodiment of machine according to the invention for the manufacture of flexible pouches for containing liquids for pharmaceutical or alimentary use.

The machine herein illustrated comprises a dragging device 1 suitable to operate the step by step advancement of a band of flexible plastic material 2 (a co-extruded polyolefin plastic material) which unwinds from a band 3. The band 2 is made up of two edges of band 4 and 5, folded one on the other one as a U-shape with the opening arranged sideways.

The unwinding band is passed through a welding area defined by a hot bar type welding electrode 6, vertically mobile owing to a pneumatic cylinder 7, and by a welding counter-electrode 8 below, between one and the other one of which the band 2 is made pass. In a way known per se, the electrode 6 and the counter-electrode 8 carry out parallel transversal seals 22 of the two overlapping edges of the band 2, as also a longitudinal welding 23 of the same edges along the side opening of the unwinding band. The continuous band 2 is thus subdivided into individual pouches arranged next to each other 9.

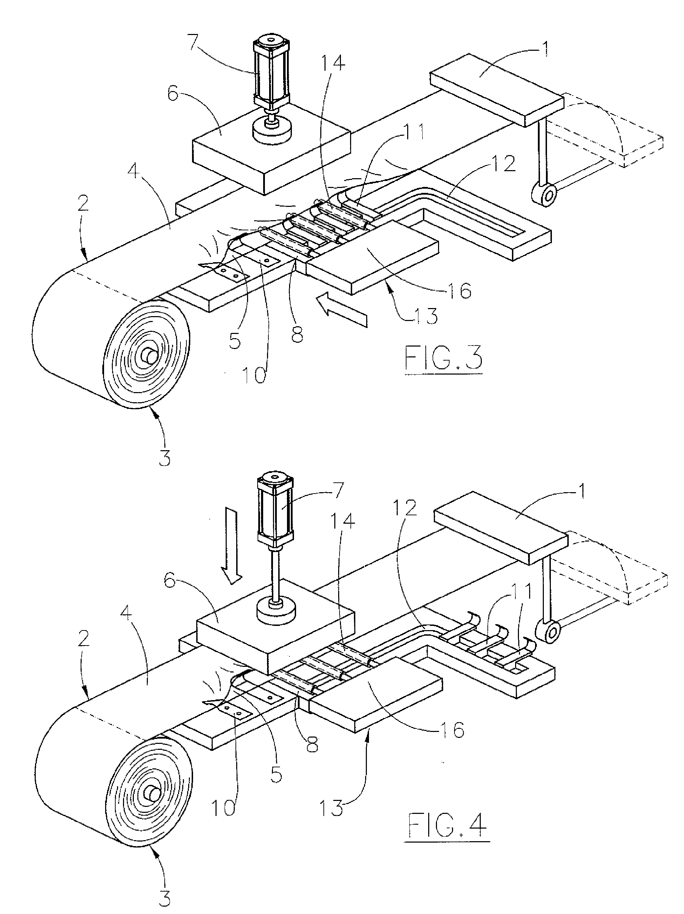

The aforesaid welding area is preceded by a set of fixed opening elements 10 for the wide opening of the side opening of the band 2, whereas additional mobile opening elements 11 are associated with the same welding area so as to be movable owing to a guide 12 between the rest position of Figures 1, 4, 5 and 6 and the working position of Figures 2 and 3.

To the aforesaid welding area a device 13 for the positioning and the support of tubes 14 of plastic material (as for example co-extruded with external edge of the same material of the internal edge of the pouches 9) is also associated that is destined to be inserted into the side opening of band 2 and fastened to it at the moment of the welding.

The device 13 comprises a slidable bar 16, that can be moved horizontally in direction transversal to the one of advancement of the band 2. From the bar 16 a series of metallic needles 19 (for example of stainless steel), parallel to each other, extend in the direction of the band 2 on each one of which a respective tube 14 destined to one of the pouches 9 is insertable. The number of needles varies as a function of the number of tubes to be applied to each single pouch 9.

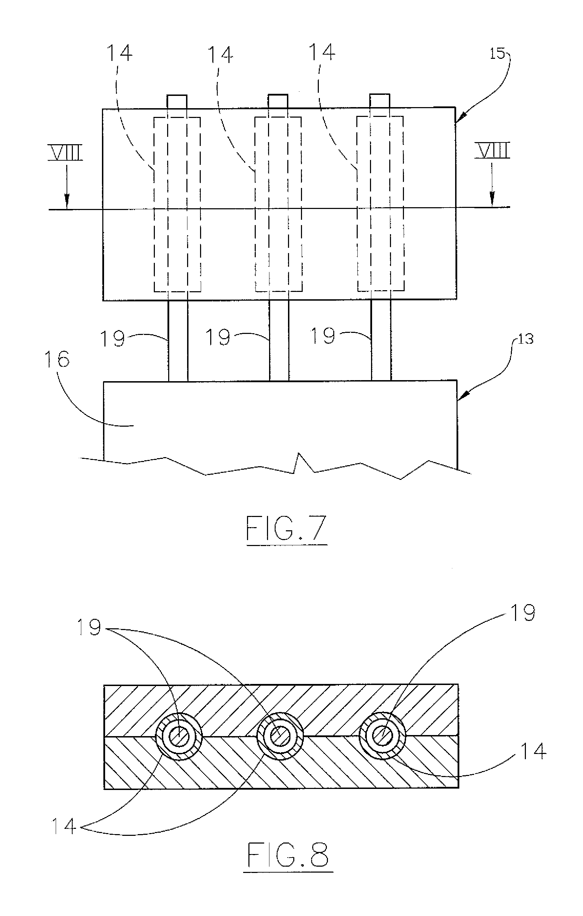

The machine finally comprises a device 15 for the preheating of the tubes 14, which can be made for example as schematically shown in Figures 1, 2, 7 and 8, that is made up of a plate and counter-plate 17 and 18 heated at the desired temperature, which get in contact with the outside of the tubes 14 in order to take them to a suitable intermediate temperature between the room temperature and the welding one assured by the electrode and the counter-electrode 6 and 8.

As an alternative, the tubes 14 can be pre-heated from the inside, by taking the needle to a suitable temperature, for example by housing inside every needle 19 an electric wire which terminates with one end fastened to the tip of the needle and has the other end connected with a power supply.

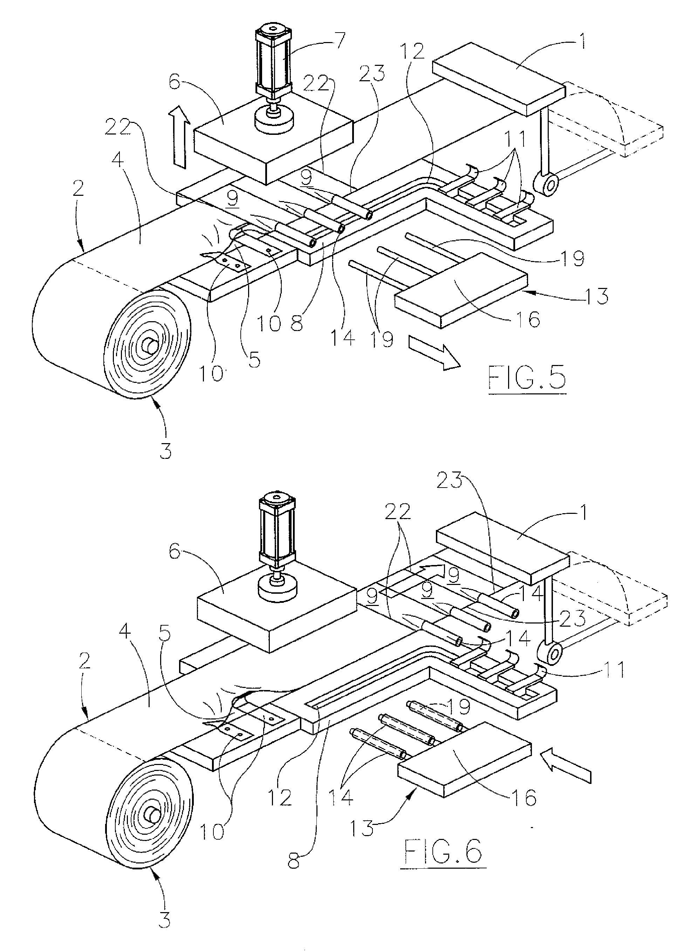

During the operation, while the opening elements 10 and 11 carry out the preliminary wide opening of the side opening of band 2 in the stage of advancement, the bar 16 in back position (Figure 6) receives on the needles 19 respective tubes 14 fed through opportune means not shown in the drawings.

The tubes 14 get then pre-heated, from the outside by means of the preheating device 15 (Figures 1, 2, 7 and 8) or from the inside by means of the heating of needles 19.

Subsequently, once the preheating device 15 has been removed, the supporting bar 16 is made advance toward the band 2 in such a way that the ends of the tubes 14 and the needles 19 which support them get inserted into the side opening of the band 2, as shown in Figure 3.

At this point the mobile opening elements 11 get removed from the welding area by means of sliding in the guide 12 and right afterward the cylinder 7 lowers the welding electrode 6 (Figure 4), which carries out the transversal seals 22 for the partitioning of the continuous band into several adjacent pouches 9 and the longitudinal seals 23 for the closing of the side openings of the pouches and the adhesion of the tubes 14 to the same pouches. The needles 19 bear the welding pressure and heat, thus allowing the tubes 14 to maintain a shape suitable for the functions of filling and emptying of the pouches, which they will subsequently have to carry out.

Once the welding has been carried out, the electrode 6 rises back again and the bar 16 goes back thus taking the needles 19 with it and therefore making them exit from the tubes 14, which remain inserted and fastened to the relative pouches 9, as shown in Figure 5.

With the frame 15 set back, a new set of tubes 14 gets inserted onto the needles 19 while the dragging device 1 determines the advancement of the band 2 with the consequent abandonment of the welding area on behalf of the pouches 9 just made (Figure 6). The cycle is therefore repeated.

## Claims

1. Machine for the manufacture of flexible pouches for containing liquids for pharmaceutical or alimentary use, comprising a band (2) of flexible plastic material made up of two edges (4, 5) folded one on the other one according to a U-shape conformation with opening arranged sideways, means (1) for the step by step advancement of said band (2) of flexible plastic material, heat welding means (6, 8) for welding said edges (4, 5) to each other transversally and along said opening so as to form single pouches (9) of flexible plastic material arranged next to each other, and a device (13) for introducing a variable number of tubes (14) of plastic material in said opening and to support them into it during welding, said device (13) comprising a supporting bar (16) for a plurality of metallic needles (19) parallel to each other, destined to the support of respective tubes (14), and said supporting bar (16) being slidable in direction transversal to the one of advancement of the band (2) in order to be movable between a back position, in which loading of the tubes (14) on respective needles (19) is operable, and a position near the band (2), in which said needles (19) insert and keep the respective tubes (14) inside said opening of the band (2) for the entire welding operation, **characterised in that** it comprises means (15) for preheating the tubes (14) after the their loading on said needles (19) and before their introduction into said opening of the band (2).

2. Machine according to claim 1, **characterised in that** said preheating means (15) operate on the external surface of the tubes (14).

3. Machine according to claim 2, **characterised in that** said preheating means (15) operate on the internal surface of the tubes (14).
